# FASCICULE DE BREVET EUROPEEN

(11) **EP 2 663 777 B1**
(45) Date de publication et mention de la délivrance du brevet: **05.11.2014**
(21) Numéro de dépôt: 12702301.8
(22) Date de dépôt: 05.01.2012
(51) Int. Cl.: F04D 27/02, B64D 33/02, F02C 6/08, F02C 7/045, F02K 3/06

(54) **TURBORÉACTEUR À DOUBLE FLUX**
TURBOFANTRIEBWERK
TURBOFAN ENGINE

(30) Priorité: 11.01.2011 FR 1150224
(43) Date de publication de la demande: 20.11.2013
(73) Titulaire: Snecma, 75015 Paris (FR)
(72) Inventeur: MOREL, Cédric, F-77550 Moissy Cramayel Cedex (FR); VUILLEMIN, Alexandre, Alfred, Gaston, F-77550 Moissy Cramayel Cedex (FR)
(74) Mandataire: Robert, Mathias
(86) Numéro de dépôt international: PCT/FR2012/050027
(87) Numéro de publication internationale: WO 2012/095592

(56) Documents cités:
- GB-A- 2 407 142
- US-A- 3 730 639
- US-A- 3 735 593
- US-A- 6 004 095

## Description

La présente invention concerne un turboréacteur à double flux pour un aéronef, notamment pour un avion.

La réduction des émissions sonores des avions dans les zones aéroportuaires est un enjeu majeur et des normes de plus en plus strictes sont imposées à cet effet.

Des efforts d'investigation ont permis d'identifier et de quantifier les principaux phénomènes responsables des niveaux de bruits importants générés par les avions en phase d'atterrissage et de décollage. On peut grossièrement séparer ces bruits en deux grandes catégories, à savoir le bruit de cellule et le bruit de moteurs.

Le bruit de cellule est dû aux interactions de l'écoulement de l'air et des obstacles ou des irrégularités de surface de l'avion, tels que les trains d'atterrissage, les becs de bord d'attaque, les volets de bords de fuite, etc.

Dans le cas d'un turboréacteur à double flux, le bruit de moteur comprend principalement un bruit de jet, dû à l'éjection rapide de gaz chauds par la tuyère, et un bruit de soufflante, dû à des interactions entre l'écoulement d'air et la structure fixe, qui sont générées par les pales de la soufflante alimentant le flux secondaire.

On rappelle qu'un turboréacteur à double flux comporte une roue de soufflante portant des aubes et tournant dans un carter annulaire. En aval de la soufflante, une partie du flux est dirigée vers une veine primaire dans laquelle circule un flux primaire compressé par un compresseur basse pression et par un compresseur haute pression pour l'alimentation d'une chambre de combustion, une autre partie du flux issu de la soufflante étant dirigée vers une veine secondaire dans laquelle s'étend un aubage redresseur.

Le spectre acoustique d'une soufflante peut être décomposé en une partie tonale et une partie à large bande dont l'importance augmente avec l'apparition des turboréacteurs à très fort taux de dilution, pour lesquels le flux secondaire est important.

Les sources du bruit à large bande dans une soufflante sont multiples, une source dominante étant l'interaction entre le sillage de la roue de soufflante et le stator, en particulier l'aubage redresseur.

Afin de minimiser les bruits générés par la soufflante, une solution consiste à optimiser le dessin des aubes du redresseur. Cependant, les contraintes de rendement du moteur en vitesse de croisière ne permettent pas d'adapter au mieux les aubes lors du fonctionnement à l'approche et au décollage.

Le brevet US 3 730 639 propose d'équiper le carter externe de la soufflante à l'aide de moyens d'aspiration comportant une ouverture d'entrée d'air, formée par une fente, disposée en amont des extrémités radialement externes des aubes de la roue de soufflante, et une pompe d'aspiration.

De cette manière, une partie de la couche limite formée sur la paroi interne du carter externe est aspirée, de façon à limiter les interactions entre cette couche limite et les aubes de la roue de soufflante et réduire ainsi le bruit. Cette solution ne réduit pas sensiblement la composante dominante du bruit, générée par l'interaction entre le sillage de la roue de soufflante et l'aubage redresseur situé en aval.

De plus, la présence d'un jeu entre le carter et les extrémités des aubes de la roue de soufflante conduit à la génération de tourbillons par effet d'entraînement de l'écoulement de tête, qui sont porteurs d'un haut niveau d'énergie cinétique turbulente et qui, une fois mélangés avec la couche limite sur le carter, contribuent de façon significative au bruit à large bande d'interaction entre le sillage turbulent et l'aubage redresseur.

Une solution connue consiste à prévoir des moyens d'injection d'air au niveau des zones tourbillonnaires de la soufflante. Pour cela, des canaux de passage d'air doivent être réalisés dans les aubes de la roue de soufflante, ce qui augmente la complexité de réalisation de ces aubes, en particulier lorsque celles-ci sont réalisées en matériau composite. GB 2407142 divulgue l'art antérieur.

L'invention a notamment pour but d'apporter une solution simple, efficace et économique à ce problème.

A cet effet, elle propose un turboréacteur à double flux selon la revendication 1.

Les moyens d'aspiration ainsi positionnés permettent d'aspirer l'écoulement turbulent en sommet des aubes de la roue de soufflante pour qu'il n'interagisse pas avec l'aubage redresseur en aval, et ainsi de réduire sensiblement le bruit généré par l'interaction entre le sillage de la roue de soufflante et le stator, en particulier avec l'aubage redresseur situé en aval.

Selon une caractéristique de l'invention, les moyens d'aspiration comprennent une embouchure formée par au moins une fente d'entrée réalisée dans la paroi interne du carter et reliée à un canal d'aspiration s'étendant vers l'aval.

Avantageusement, cette fente d'entrée des moyens d'aspiration est située axialement en regard uniquement de la partie amont de la corde des aubes de la roue de soufflante à leur extrémité radialement externe.

Le positionnement de la fente d'aspiration uniquement en regard de la partie amont de la corde permet d'aspirer l'écoulement de jeu dès la naissance du tourbillon de coin de bord d'attaque. Des simulations ont en effet montré qu'il y avait plusieurs lieux de naissance de tourbillons de sommet d'aube, les plus énergétiques étant localisés approximativement sur le premier tiers de la corde en sommet de pale. Les fentes ont ainsi été positionnées dans la zone où le plus d'activité tourbillonnaire est créée.

Ainsi, préférentiellement, la fente d'entrée des moyens d'aspiration est située axialement en regard uniquement du tiers amont de la corde des aubes de la roue de soufflante à leur extrémité radialement externe.

De manière préférée, la fente d'entrée a une dimension axiale comprise entre 3 et 10 % de la corde des aubes à leur extrémité radialement externe.

Ainsi, seule une faible fraction de débit est prélevée, de façon à ne pas pénaliser le rendement du moteur.

Selon une autre caractéristique de l'invention, la fente d'entrée est annulaire ou formée d'une pluralité d'orifices répartis autour de l'axe de la soufflante.

Les moyens d'aspiration peuvent comprendre une pompe d'aspiration logée dans le carter.

Selon une forme de réalisation de l'invention, les moyens d'aspiration comprennent au moins deux fentes d'entrée formées dans la paroi interne du carter et décalées axialement l'une par rapport à l'autre.

De manière avantageuse, les moyens d'aspiration d'air comprennent un collecteur annulaire logé dans le carter et relié à la ou aux fentes d'entrées par des canaux d'aspiration.

Les moyens d'aspiration d'air comprennent par ailleurs des orifices de sortie d'air, formés en aval de la roue de soufflante dans la paroi externe ou dans la paroi interne du carter de soufflante.

Plus particulièrement, les orifices de sortie des moyens d'aspiration d'air peuvent être formés dans la paroi interne du carter de soufflante en aval de l'aubage redresseur de sortie de la soufflante.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe d'une partie d'un turboréacteur selon une première forme de réalisation de l'invention,
- la figure 2 est une vue correspondant à la figure 2, d'une deuxième forme de réalisation de l'invention,
- la figure 3 est une vue schématique, agrandie et en coupe, d'une partie d'un turboréacteur selon une troisième forme de réalisation de l'invention.

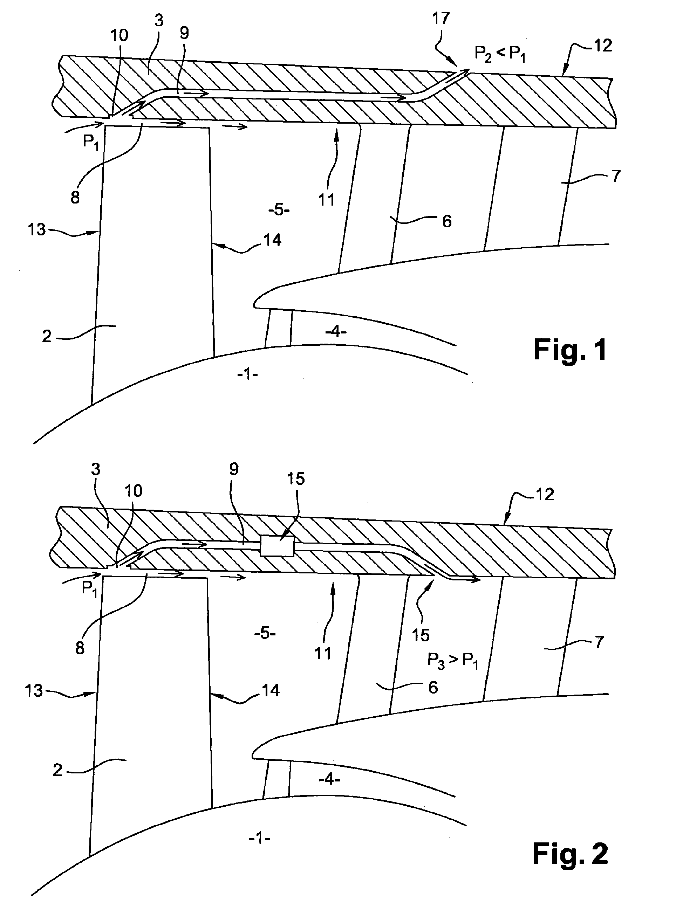

La figure 1 représente une partie d'un turboréacteur comportant une roue de soufflante 1 portant des aubes 2 et entourée par un carter annulaire 3. En aval de la soufflante, une partie du flux produit est dirigée vers une veine primaire 4 dans laquelle circule un flux primaire destiné à être compressé par un compresseur basse pression et par un compresseur haute pression pour alimenter la chambre de combustion (non représentée), une autre partie du flux issu de la soufflante étant dirigée vers une veine secondaire 5 dans laquelle s'étend un aubage redresseur 6, également appelé OGV (Outlet Guide Vane). Cet aubage redresseur 6 a pour effet de redresser le flux d'air secondaire s'échappant de la soufflante afin d'en limiter la giration.

En aval de l'aubage 6 se trouvent des bras structuraux 7 radiaux présentant une résistance mécanique élevée et s'étendant également dans la veine secondaire 5.

Selon l'invention, le carter 3 comprend des moyens d'aspiration d'air débouchant dans le jeu annulaire 8 formé entre le carter 3 et les extrémités radialement externes des aubes 2 de la roue de soufflante 1.

Dans la forme de réalisation représentée à la figure 1, les moyens d'aspiration d'air comportent au moins un canal d'aspiration 9 comprenant une embouchure ouvrant dans le jeu annulaire 8 précité, formée par une fente d'entrée 10 réalisée dans la paroi interne 11 du carter 3. La fente 10 s'étend sur toute la circonférence de la paroi interne du carter 3 et chaque canal d'aspiration 9 s'étendant vers l'aval débouche sur la paroi externe 12 du carter dans une zone déterminée, par exemple une zone située axialement en aval de l'aubage redresseur 6 pour souffler de l'air vers l'extérieur afin de recoller la couche limite sur la paroi externe 12 du carter lorsque cela est nécessaire.

Les dimensions et la position des fentes 10 et des canaux d'aspiration 9 sont déterminées de façon ce que seule une faible partie du débit d'air circulant au travers de la soufflante soit prélevée par la fente 10, par exemple entre 0,5 et 2 % du débit total, préférentiellement de l'ordre de 1%.

Le débit d'air aspiré est sensiblement proportionnel aux vitesses de rotation de l'arbre de la turbine basse pression qui entraîne la roue 1 de la soufflante et qui varient largement entre les phases d'atterrissage et de décollage. Le débit d'air aspiré dépend du jeu radial 8 entre les extrémités externes des aubes 2 et la paroi interne 11 du carter 3.

La fente d'entrée 10 a une dimension axiale comprise entre 3 et 10 % de la corde des aubes 2 à leur extrémité radialement externe. On rappelle que la corde d'une aube est la distance entre son bord d'attaque 13, c'est-à-dire son bord amont, et son bord de fuite 14, c'est-à-dire son bord aval.

La fente d'entrée 10 des moyens d'aspiration est située axialement en regard de la seule moitié amont de la corde des aubes 2 à leur extrémité radialement externe. La fente d'entrée 10 ne s'étend donc pas en amont des extrémités des aubes ou en regard de la moitié aval de la corde des aubes 2.

A la place d'une fente d'entrée annulaire 10, on peut prévoir une série d'orifices répartis circonférentiellement autour de l'axe de la soufflante.

Dans le cas de la figure 1, la pression p₂ en sortie du ou de chaque canal d'aspiration 9 est inférieure à la pression p₁ à l'entrée dans la fente 10, la différence de pression permettant de vaincre les pertes de charges dans le canal 9 et d'aspirer l'air. Il n'est donc pas utile d'équiper le ou les canaux 9 avec une pompe d'aspiration.

Dans la forme de réalisation de la figure 2 au contraire, le canal d'aspiration 9 débouche sur la paroi interne 11 du carter 3, en aval de l'aubage redresseur 6, dans une zone où la pression p₃ est plus forte que dans la fente d'entrée 10. Il est donc nécessaire d'équiper le canal d'aspiration avec une pompe d'aspiration 15, logée dans le carter 3.

Bien entendu, le nombre et la position des canaux 9 peuvent varier en fonction des applications.

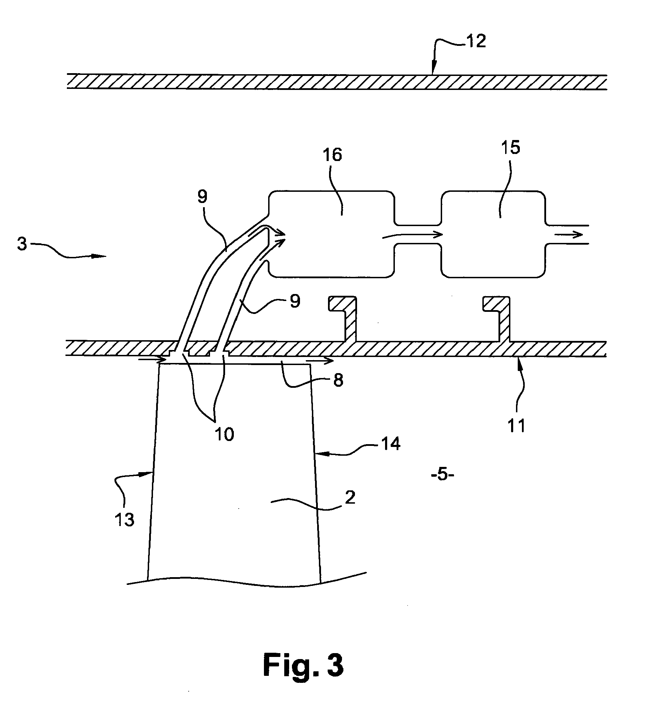

Dans la forme de réalisation de la figure 3, le carter externe 3 comporte au moins deux fentes d'entrée 10 formées dans la paroi interne 11 du carter 3 et décalées axialement l'une par rapport à l'autre. Des canaux d'aspiration 9 s'étendent vers l'aval depuis chacune des fentes d'entrée 10 jusqu'à un collecteur annulaire 16 logé dans le carter 3. L'air dans le collecteur 16 est ensuite aspiré à l'aide d'une pompe 15 puis est éjecté, soit sur la paroi interne 11 du carter 3, soit sur la paroi externe 12, d'une manière similaire à celle décrite précédemment.

L'invention permet ainsi, quelle que soit la forme d'exécution utilisée, de prélever l'écoulement d'air en sommet d'aube 2 de soufflante afin de limiter l'interaction entre cet écoulement à forte turbulence et l'aubage redresseur 6 situé en aval. Cela permet de réduire sensiblement le bruit à large bande généré par cette interaction. La fraction prélevée du débit de la soufflante étant faible, le rendement de la soufflante n'est pas sensiblement pénalisé.

## Revendications

1. Turboréacteur à double flux, comportant une roue de soufflante (1) portant des aubes (2) et entourée par un carter annulaire (3), le carter (3) comprenant des moyens d'aspiration d'air (9, 10) dans le jeu annulaire (8) formé entre le carter (3) et les extrémités radialement externes des aubes (2) de la roue de soufflante (1), les moyens d'aspiration comprenant une embouchure formée par au moins une fente d'entrée (10) réalisée dans la paroi interne (11) du carter (3) et reliée à un canal d'aspiration (9) s'étendant vers l'aval, **caractérisé en ce que** la fente d'entrée (10) des moyens d'aspiration est située axialement, en regard uniquement de la partie amont de la corde des aubes (2) de la roue de soufflante à leur extrémité radialement externe.

2. Turboréacteur selon la revendication 1, **caractérisé en ce que** la fente d'entrée (10) a une dimension axiale comprise entre 3 et 10 % de la corde des aubes (2) à leur extrémité radialement externe.

3. Turboréacteur selon la revendication 1 ou 2, **caractérisé en ce que** la fente d'entrée (10) est annulaire ou formée d'une pluralité d'orifices répartis autour de l'axe de la soufflante.

4. Turboréacteur selon l'une des revendications 1 à 3, **caractérisé en ce que** les moyens d'aspiration comprennent une pompe d'aspiration (15) logée dans le carter (3).

5. Turboréacteur selon l'une des revendications 1 à 4, **caractérisé en ce que** les moyens d'aspiration comprennent au moins deux fentes d'entrée (10) formées dans la paroi interne (11) du carter (3) et décalées axialement l'une par rapport à l'autre.

6. Turboréacteur selon l'une des revendications 1 à 4, **caractérisé en ce que** les moyens d'aspiration d'air comprennent un collecteur annulaire (16) logé dans le carter (3) et relié à la ou aux fentes d'entrée (10) par des canaux d'aspiration (9).

7. Turboréacteur selon l'une des revendications 1 à 6, **caractérisé en ce que** les moyens d'aspiration d'air comprennent des orifices de sortie d'air (15), formés en aval de la roue de soufflante (1) dans la paroi externe (12) ou dans la paroi interne (11) du carter (3) de soufflante.

8. Turboréacteur selon la revendication 7, **caractérisé en ce que** les orifices de sortie (15) des moyens d'aspiration d'air sont formés dans la paroi interne (11) du carter de soufflante (3) en aval d'un aubage redresseur (6) de sortie de la soufflante.

## Patentansprüche

1. Turbofantriebwerk, enthaltend ein Gebläserad (1), das Schaufeln (2) trägt und von einem ringförmigen Gehäuse (3) umgeben ist, wobei das Gehäuse (3) Luftansaugmittel (9, 10) in dem ringförmigen Spiel (8) aufweist, das zwischen dem Gehäuse (3) und den radial äußeren Enden der Schaufeln (2) des Gebläserads (1) gebildet ist, wobei die Ansaugmittel eine Mündung aufweisen, die aus zumindest einem Einlassschlitz (10) gebildet ist, der in der Innenwand (11) des Gehäuses (3) ausgebildet und mit einem Ansaugkanal (9) verbunden ist, der sich in Richtung stromabwärts erstreckt, **dadurch gekennzeichnet, dass** der Einlassschlitz (10) der Ansaugmittel sich axial nur gegenüber dem stromaufwärtigen Teil der Profilsehne der Schaufeln (2) des Gebläserads an deren radial äußerem Ende befindet.

2. Turbotriebwerk nach Anspruch 1, **dadurch gekennzeichnet, dass** der Einlassschlitz (10) einen axiale Abmessung zwischen 3 und 10 % der Profilsehne der Schaufeln (2) an deren radial äußerem Ende aufweist.

3. Turbotriebwerk nach Anspruch 1 oder 2, **dadurch gekennzeichnet, dass** der Einlassschlitz (10) ringförmig ist bzw. aus einer Mehrzahl von Öffnungen gebildet ist, die um die Achse des Gebläses herum verteilt sind.

4. Turbotriebwerk nach einem der Ansprüche 1 bis 3, **dadurch gekennzeichnet, dass** die Ansaugmittel eine Ansaugpumpe (15) aufweisen, die in dem Gehäuse (3) aufgenommen ist.

5. Turbotriebwerk nach einem der Ansprüche 1 bis 4, **dadurch gekennzeichnet, dass** die Ansaugmittel zumindest zwei Einlassschlitze (10) aufweisen, die in der Innenwand (11) des Gehäuses (3) ausgebildet und axial zueinander versetzt sind.

6. Turbotriebwerk nach einem der Ansprüche 1 bis 4, **dadurch gekennzeichnet, dass** die Luftansaugmittel einen ringförmigen Kollektor (16) aufweisen, der in dem Gehäuse (3) aufgenommen und über Saugkanäle (9) mit dem bzw. den Einlassschlitzen (10) verbunden ist.

7. Turbotriebwerk nach einem der Ansprüche 1 bis 6, **dadurch gekennzeichnet, dass** die Luftansaugmittel Luftauslassöffnungen (15) aufweisen, die stromabwärts des Gebläserads (1) in der Außenwand (12) oder in der Innenwand (11) des Gehäuses (3) des Gebläses ausgebildet sind.

8. Turbotriebwerk nach Anspruch 7, **dadurch gekennzeichnet, dass** die Auslassöffnungen (15) der Luftansaugmittel in der Innenwand (11) des Gehäuses (3) des Gebläses stromabwärts eine Leitbeschaufelung (6) am Auslass des Gebläses ausgebildet sind.

## Claims

1. A bypass turbojet having a fan wheel (1) carrying blades (2) and surrounded by an annular casing (3), the casing (3) including air suction means (9, 10) for sucking air from the annular clearance (8) formed between the casing (3) and the radially outer ends of the blades (2) of the fan wheel (1), the suction means comprising an inlet formed by at least one inlet slot (10) formed in the inside wall (11) of the casing (3) and connected to a suction channel (9) extending downstream, the turbojet being **characterized in that** the inlet slot (10) of the suction means is situated axially in register solely with the upstream portions of the chords of the blades (2) of the fan wheel at their radially outer ends.

2. A turbojet according to claim 1, **characterized in that** the inlet slot (10) has an axial dimension lying in the range 3% to 10% of the chord of the blades (2) at their radially outer ends.

3. A turbojet according to claim 1 or claim 2, **characterized in that** the inlet slot (10) is annular or made up of a plurality of orifices distributed around the axis of the fan.

4. A turbojet according to any one of claims 1 to 3, **characterized in that** the suction means comprise a suction pump (15) housed in the casing (3).

5. A turbojet according to any one of claims 1 to 4, **characterized in that** the suction means comprise at least two inlet slots (10) formed in the inside wall (11) of the casing (3) and axially offset relative to each other.

6. A turbojet according to any one of claims 1 to 4, **characterized in that** the air suction means comprise an annular manifold (16) housed in the casing (3) and connected to the inlet slot(s) (10) via suction channels (9).

7. A turbojet according to any one of claims 1 to 6, **characterized in that** the air suction means comprise air outlet orifices (15) formed downstream from the fan wheel (1) in the outside wall (12) or in the inside wall (11) of the fan casing (3).

8. A turbojet according to claim 7, **characterized in that** the outlet orifices (15) of the air suction means are formed in the inside wall (11) of the fan casing (3) downstream from outlet OGVs (6) of the fan.
